# EUROPEAN PATENT APPLICATION

(11) **EP 1 313 051 A1**
(43) Date of publication of application: **21.05.2003**
(21) Application number: 02257033.7
(22) Date of filing: 10.10.2002
(51) Int. Cl.: G06F 17/60

(54) **Reward system**

(30) Priority: 16.11.2001 US 992363
(71) Applicant: NCR INTERNATIONAL INC., Dayton, Ohio 45479 (US)
(72) Inventor: DeSouza, Kenneth, Kitchener, Ontario N2A 3K9 (CA); Woodward, Sean, Waterloo, Ontario N2K 3M8 (CA); Fare, James W.D., Waterloo, Ontario N2T 2K4 (CA)
(74) Representative: Williamson, Brian

(57) **Abstract**

A system for unobtrusive detection and identification of entry of customers into a retail establishment. The customer carries a client device, which communicates with a detector at an entrance of the establishment, when the client device comes within range of the detector. The client device identifies the customer. In response, the detector causes issuance of an award to the customer, such as a discount available later at the retail establishment. The detection-identification process is invisible to the customer, and also to bystanders.

## Description

The invention concerns one approach to issuing rewards to patrons of retail establishments, wherein the issuance process is invisible to the patrons and to bystanders.

Retail establishments continually seek to improve the goods and services which they provide, and to improve their relationships with their customers. In pursuit of these improvements, the retail establishments attempt to identify personal preferences of their customers.

Numerous approaches exist to identifying these preferences, and databases are often constructed and maintained which provide information about customers, their behavior, and their preferences.

The invention presents an improvement to the gathering of data concerning customer preferences.

An object of the invention is to provide improved customer service to patrons of retail establishments.

A further object of the invention is to provide improved data collection of customer behavior.

In one form of the invention, the entry, departure, or both, of a customer from a retail establishment is detected. Upon detection, a reward is given to the customer for the sole undertaking of entering the establishment. The reward can be given by issuance of award "points," analogous to frequent-flyer miles.

Embodiments of the present invention will now be described, by way of example, with reference to the accompanying drawings, in which:
Figure 1 illustrates a retail establishment 5, and a customer 3 entering the establishment 5 carrying one form of the invention 6, and
Figure 2 is a flow chart illustrating processes undertaken by one form of the invention.

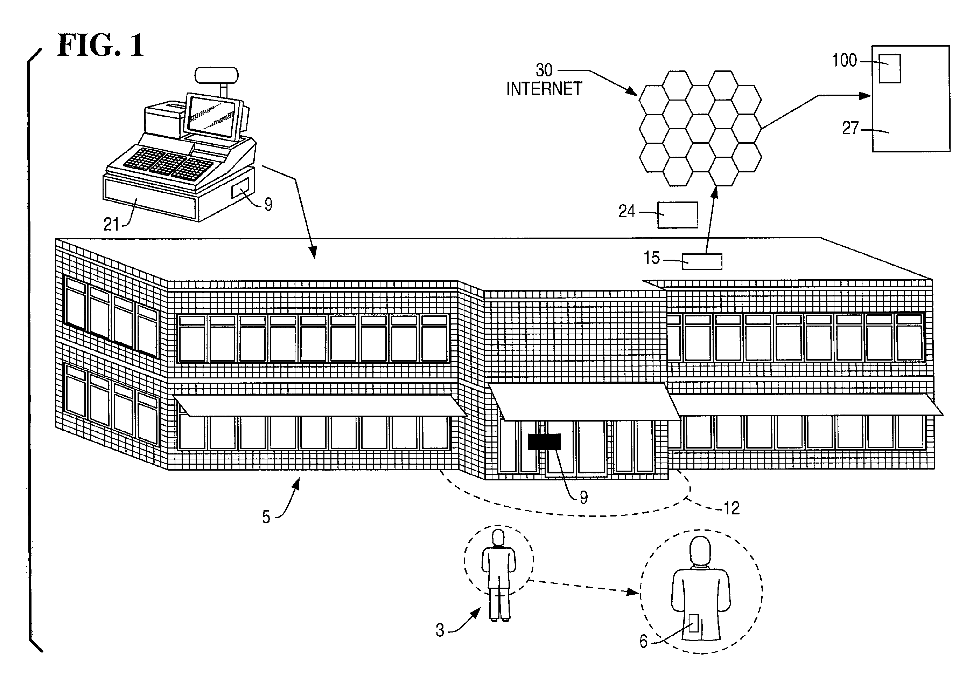

Figure 1 illustrates a person 3 entering a retail establishment 5, called a store 5 herein. The person carries a client device 6, known in the art, which is detected when it comes within range of a detector 9, also known in the art. The detection range of the detector 9 is indicated by dashed line 12.

An example of a client device 6 is found in known smart cards, and an example of detector 9 can be found in known non-contact readers of smart cards. Other examples of the client device 6 are found in cellular telephones and Personal Digital Assistants, PDAs.

As another example, client device 6 can take the form of a GPS, Global Positioning System device. The GPS detects its precise latitude and longitude. The GPS can communicate its location and identity to a remote party, such as server 27. Server 27 determines whether the GPS is in proximity of the store 5 and, if so, grants an award as described herein.

In the detection process, the client device 6 transmits information which identifies the person 3 to the detector 9. The information can take the form of the person's name, account number, and so on. As discussed later, numerous protocols can be used in the data transfer process, and the particular protocol chosen is not seen as significant, since the goal is to identify the person 3.

When the person 3 is detected and identified, a computer 15, in communication with the detector 9 (communication link is not shown), issues an award to the person 3. The award can take numerous forms, and the following examples are illustrative, but not exhaustive.

One type of award can be a discount of, say, five percent on the next purchase which the person 3 makes in the store 5. The computer 15 credits the discount to an account of the person 3 at the time of identification of the person 3, and the credited discount is stored in memory. The credited discount may expire after a predetermined period, such as one month.

Such discounts are frequently termed "loyalty points" in the retail field, and are roughly analogous to "frequent flyer miles" used in the commercial aviation field.

The person 3 must be identified at the later time when the person wishes to take advantage of the discount. If the person makes the purchase using a credit card, then the credit card may suffice to identify the person 3. Otherwise, or in addition, a sales representative of the store may ask the person's identity.

In addition, each cash register, or point of sale terminal 21 may be equipped with one of the detectors 9. That detector 9 detects the client device 6 carried by the customer, and identifies the customer.

In a second approach to rewarding the customer for entering the store, computer 15 transmits a message 24 to a remote server 27. Message 24 can be carried by the Internet 30, or any suitable transmission medium.

The message 24 authorizes the remote server 27 to issue an award to the customer. For example, the remote server 27 may handle a credit card account of the customer, and the award may take the form of a reduction in the customer's bill, a reduction in a current interest charges, and so on.

Significant features of the second approach are that (1) local computer 15 serves only to notify the remote server 27 of the identification of the customer and (2) the remote server 27 handles the issuance of the award, and associated accounting of the award. It is foreseen that independent service providers will operate server 27, to handle the awards process, while store 5 will only detect and identify the person 3.

In a third approach to rewarding the customer, the computer 15 adds the name of the customer to a list and, at a later time, tangible paper discount coupons, or other tangible media, such as sports or entertainment tickets, are mailed to the customer.

Therefore, in one form of the invention, the entry of a customer into a store is detected in a non-contact manner, which is unobtrusive to the customer. Further, the fact of detection is invisible to the customer and to all observers. The detection process not only detects the presence of the customer, but also identifies the customer. When the customer is detected and identified, an award is issued to the customer.

However, the award is not physically delivered directly to the customer at that time. Rather, at that time the award is (1) created for the benefit of the customer, or (2) delivered to an account of the customer, or (3) delivered to a third party for later delivery to the customer, or (4) later mailed to the customer and so on.

Significantly, in one form of the invention, the award takes the form of data, as opposed to tangible media, such as coupons. The data can be transmitted to any location, almost instantaneously. Also, at the time of the award, the customer is required to do nothing, and no social interaction between the customer and the store occurs, except, of course, the entry of the customer into the store, which was already occurring.

The term "social interaction" is used for a specific purpose. The fact that the customer carries the client device 6 could be deemed a type of interaction, since (1) the customer performs action in carrying the client device and (2) the device 6 performs action in interacting with the detector 9.

However, this type of interaction is not human-to-human interaction, or social interaction. In one form of the invention, the award is made to the customer without any social interaction: the customer interacts with no persons in obtaining the award.

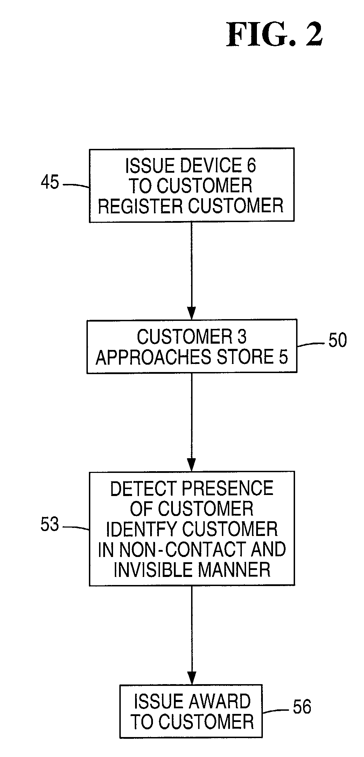

Figure 2 is a flow chart of processes undertaken by one form of the invention. Block 45 indicates that (1) a client device 6 of Figure 1 is issued to a customer, and (2) the customer's identity is registered and associated with the device 6, so that when the device 6 is detected by a detector 9, the identity of the customer carrying the client device 3 can be inferred.

Block 50 indicates that the customer approaches a store, carrying the client device 6. Block 53 indicates that the detector 9 in Figure 1 detects and identifies the customer, in a non-contact and invisible manner. Block 56 indicates that the invention issues an award to the customer, in response to the detection-identification event.

### Alternate Embodiments

It is not necessary that the person 3 in Figure 1 be identified upon entry into the store 5, but the person 3 can be identified upon leaving the store 5. Alternately, an award can be issued whenever the person 3 is detected within the detection range 12 of the detector 9.

Preferably, the detection range 12 encompasses all paths into, and out of, the store 5. Thus, a person carrying a client device 6 will necessarily be identified, because the person must make an excursion through the detection range 12 when entering, or leaving, the store 5.

In one form of the invention, a data warehouse, perhaps maintained on server 27 in Figure 1 and indicated by block 100, maintains demographic data on the customers of the store 5. In addition, the data warehouse 100 contains other data concerning the customer, such as (1) the dates and times of entry into the store 5, as detected by detector 9 and described above, (2) the type of client device 6 used by the customer, (3) the total amount or value of award points accumulated by the customer, and (4) other data of relevance to the store 5.

In this form of the invention, the client device 6 contains a table of restrictions or rules on usage of the data in the warehouse 100 which relates to the customer. An example is given in Table 1, below. It is emphasized that the rules given in Table 1 are exemplary, and other types of rules are possible.

**TABLE 1**

| | |
|---|---|
| NOSHARE of Profile.name | //Do not reveal my name |
| SHARE of Profile.Age, Profile.Gender | //Do share my age and gender |
| SHARE of Store.Time_ OfLastVisit | //You can know when I last visited |
| NOACCEPT of Store.ads | //Don't download advertisements to my client device 6 |
| ACCEPT of Store.coupons | //I'll accept coupons for this store. |

In Table 1, the labels such as "Profile.name" represent names of data files, or other data units, in storage and which relate to the customer. The capitalized commands, such as NOSHARE, indicate restrictions on a data unit. In the case of NOSHARE, for example, nothing in the data unit named "Profile.name" is to be shared.

Sharing refers to disclosure of contents of the data unit outside the store 5, or outside control of the store 5. That is, no sharing occurs if the store 5 maintains the contents of a data unit in its own possession. But if, for example, store 5 divulges any contents of a data unit to another party, such as a governmental entity, then sharing occurs.

The customer can set up Table 1 by programming the client device in a known manner.

The last two entries in Table 1 indicate that the detector 9, or an associated device (not shown) downloads data into the client device 6. The download can be through a direct communication link between detector 9 and client device 6.

The communication link can also be indirect, as when computer 15 delivers a data packet to the Internet 30, addressed to the client device 6. In this example, the client device 6 may be equipped with a cellular modem, or similar device, to receive the data packet. As implied in Table 1, the data packet may contain advertisements or discount coupons.

As another example, computer 15 may know the e-mail address of the customer. When detector 9 detects the presence of the client device 6, computer 15 transmits a data packet to the customer's e-mail address, but subject to the restrictions contained in Table 1.

The preceding example illustrates a specific embodiment of the invention. The invention detects and identifies the presence of the customer 3 at the store 5, as described above. In response, the invention transmits a data packet through an e-mail message to the customer. The data packet may contain discount coupons, or other awards, or product information derived from a store of product information stored in the server 27. The customer's e-mail address was obtained in the registration step of block 45 in Figure 2.

A significant feature of this form of the invention is that the set of restrictions is contained in the client device 6, and the type of restrictions are under control of the customer who owns the client device 6.

### Additional Considerations

1. The discussion above was framed in terms of a customer entering a door in a building. In the more general case, any type of portal to an enclosure is contemplated, such as a sports arena or stadium, or even a fenced area, such as a fairground.
2. The client device 6 of Figure 1 can be viewed generically as a transponder. The transponder may broadcast its identity code continually, and the detector 9 in Figure 1 will pick up the identity code when the client device 6 comes sufficiently close that the detector 9 is within range of the transponder's broadcast. Alternately, the transponder may broadcast its identity code only in response to an interrogation signal issued by the detector 9.
   The particular protocol used by which (1) the transponder identifies itself and (2) obtains data is not necessarily significant. Numerous protocols are available.
3. The client device 6 can be carried by the customer, as in a pocket or purse.
   Further, the client device 6 may be kept in association with the customer, as in a baby stroller. Further still, the customer may be present in a vehicle when the identification process occurs, as when the customer visits a drive-through merchant, such as a pizza restaurant.
4. The client device 6 issues an identity signal. Preferably, the identity signal is invisible to third parties, and one significance of the invisibility can be understood by a contrasting example.
   A representative of the store could visually examine people entering the store, and identify some people. The representative could award bonus points to those identified people. However, under the invention, no such visual cues are used, and the process of identification is invisible to the person identified and also to nearby third parties. Thus, to give an example illustrating this point, the identification process can be undertaken in complete darkness.
5. In one form of the invention, the points, or awards, given to the customer are delivered prior to any purchase made by the customer and, in many cases, will be delivered with no purchase at all being made. This distinguishes the invention from other approaches, wherein awards are given in connection with a purchase.
6. Software and hardware which implement the processes described herein are contained within computer 15 in Figure 1, and cooperate with other apparatus shown in the Figure, such as detector 9.

Numerous substitutions and modifications can be undertaken without departing from the true spirit and scope of the invention. What is desired to be secured by Letters Patent is the invention as defined in the following claims.

## Claims

1. A method of updating a database, comprising:
a) at a portal to an enclosure, receiving an identity signal from a transponder carried by someone entering or leaving the enclosure;
b) locating an account in a database, based on the identity signal; and
c) creating a change in the account.

2. A method as claimed in claim 1, wherein the identity signal is invisible to third parties.

3. A system, comprising:
a) means for receiving an identity signal from a transponder at a portal to an enclosure carried by someone entering or leaving the enclosure;
b) means for locating an account, based on the identity signal; and
c) means for creating a change in the account.
